# EUROPÄISCHE PATENTSCHRIFT

(11) **EP 1 802 420 B1**
(45) Veröffentlichungstag und Bekanntmachung des Hinweises auf die Patenterteilung: **06.08.2008**
(21) Anmeldenummer: 05793359.0
(22) Anmeldetag: 28.09.2005
(51) Int. Cl.: B23K 26/00, C08K 3/32

(54) **LASERSCHWEISSBARE POLYMERE**
LASER-WELDABLE POLYMERS
POLYMERES POUVANT ETRE SOUDES AU LASER

(30) Priorität: 20.10.2004 DE 102004051246
(43) Veröffentlichungstag der Anmeldung: 04.07.2007
(73) Patentinhaber: Merck Patent GmbH, 64293 Darmstadt (DE)
(72) Erfinder: ROSENBERGER, Silvia, 55294 Bodenheim (DE)
(86) Internationale Anmeldenummer: PCT/EP2005/010459
(87) Internationale Veröffentlichungsnummer: WO 2006/042623

(56) Entgegenhaltungen:
- EP-A- 0 706 897
- EP-B- 1 117 502

## Beschreibung

Die vorliegende Erfindung betrifft laserschweißbare Polymere, die aus einem lasertransparenten Teil und einem laserabsorbierenden Teil bestehen und sich dadurch auszeichnen, dass der laserabsorbierende Teil als Absorber ein Kupferhydroxidphosphat und/oder Kupferphosphat enthält.

Transmissionslaserschweißen ist eine Technik die zum Zusammenschweißen von Materialien wie Kunststoffen entwickelt worden ist. Dies wird erreicht, indem zwei Kunststoffelemente in Kontakt miteinander gebracht werden, wobei eines von diesen transparent und das andere undurchlässig für Laserlicht ist. Der Kontaktbereich zwischen den zwei Kunststoffelementen wird dann einem Laserstrahl ausgesetzt. Der Laserstrahl tritt durch das transparente Kunststoffelement und wird durch das zweite undurchlässige Kunststoffelement absorbiert. Hierdurch erwärmt sich das undurchlässige Kunststoffelement, so dass der Kontaktbereich der zwei Kunststoffelemente schmilzt, wodurch eine Schweißstelle gebildet wird. Als Laser werden zumeist Dioden-Laser oder Nd:YAG Laser verwendet mit Wellenlängen zwischen 808 - 1100 nm. Die meisten Polymere sind bei dieser Wellenlänge mehr oder weniger transparent, so dass die Absorptionseigenschaft durch die Zugabe von Additiven erreicht werden kann. Als Absorber wird zumeist Ruß verwendet. Dieser zeigt sowohl im sichtbaren als auch im IR-Bereich eine sehr hohe Absorption. Ruß erlaubt daher nur schwarz als Farbe. Helle Farben und transparente Systeme sind nicht möglich.

In der EP 1117502 B1 wird eine Methode beschrieben, bei der der Absorber in der Zwischenschicht aufgebracht wird. Diese Methode ermöglicht ein Verschweißen von Polymeren in allen Farben, auch von transparenten Kunststoffen. Der Nachteil dieser Methode ist der zusätzliche Applikationsschritt der Absorberpaste. Üblicherweise ist auch die Schweißnaht eher oberflächlich. Die hier verwendeten NIR-Absorber sind organischer Natur und zeigen keine oder kaum Lichtstreuung.

Aus der EP 0 706 897 ist die Laserbeschriftung von Formkörpern aus thermoplastischen Polyurethan-Elastomeren mit Kupferphosphat als Additiv bekannt, wobei kontrastreiche und dunkle Markierungen erzielt werden.

Die zur Lasermarkierung verwendeten Additive, wie z.B. Antimon, Antimonoxid, leitfähige Pigmente und TiO₂, erlauben in der Regel Einfärbungen in hellen Farben. Sie werden den Formulierungen der laserabsorbierenden Seite zugesetzt und ermöglichen so ein transmissives Laserschweißen ohne den Zwischenschritt der Aufbringung eines Laseradditivs auf die zu verschweißende Stelle. Eine Verschweißbarkeit ist möglich aber wirtschaftlich aufgrund der langen Prozesszeiten nicht interessant. Neben der Geschwindigkeit ist es ein Nachteil, dass die Absorption dieser Additive geringer ist als die bei Ruß. TiO₂ ist beispielsweise ein Oberflächenabsorber, und erlaubt damit keine hohe Eindringtiefe der Laserstrahlung.

Bei Verwendung von stärker absorbierenden Additiven für den laserabsorbierenden Teil beim transmissiven Laserschweißen schmilzt zwar der Kunststoff, aber es lässt sich keine stabile Schweißung erzielen.

Aufgabe der vorliegenden Erfindung ist es daher laserschweißbare Polymere zu finden, die unter Einwirkung von Laserlicht eine gute Verschweißung auch für helle Farben ermöglichen. Das erfolgreiche Absorptionsmittel sollte daher eine sehr helle Eigenfarbe besitzen oder nur in sehr geringen Mengen eingesetzt werden müssen.

Überraschenderweise wurde gefunden, dass sich die Laserschweißbarkeit von Polymeren bestehend aus einem laserabsorbierenden Teil und einem lasertransparenten Teil verbessern lässt, wenn man als laserabsorbierende Substanz ein Kupferhydroxidphosphat und/oder Kupferphosphat im laserabsorbierenden Teil verwendet.

Gegenstand der vorliegenden Erfindung sind daher laserschweißbare Polymere, bestehend aus einem lasertransparenten Teil und einem laserabsorbierenden Teil, die mittels Laserlicht miteinander verschweißt werden können, dadurch gekennzeichnet, dass der laserabsorbierende Teil als Absorber Kupferhydroxidphoshat und/oder Kupferphosphat enthält.

Durch den Zusatz eines Kupferhydroxidphoshats oder Kupferphosphats als helle laserabsorbierende Substanz im laserabsorbierenden Teil in Konzentrationen von 0,5 bis 10 Gew.%, vorzugsweise 0,5 bis 7 Gew.%, und insbesondere 0,5 bis 5 Gew.%, bezogen auf das laserabsorbierende Polymerteil, wird eine sehr gute Verschweißung erzielt.

Geeignete Kupferhydroxidphosphate bzw. Kupferphosphate sind z.B. Cu₃(PO₄)₂ * 2Cu(OH)₂ (CHP = Libethenit), basisches Kupferdiphosphat Cu₃(PO₄)₂ * Cu(OH)₂, Kupferpyrophosphat Cu₂P₂O₇ * H₂O, 4CuO * P₂O₅ * H₂O, 5CuO * P₂O₅ * 3H₂O, 6CuO * P₂O₅ * 3H₂O, 4CuO * P₂O₅ * 3H₂O, 4CuO * P₂O₅ * 1,2 H₂O, 4 CuO * P₂O₅, 4CuO * P₂O₅ * 1,5 H₂O. Es können auch Gemische der genannten Kupferhydroxidphosphate bzw. Kupferphosphate eingesetzt werden, wobei die Gesamtkonzentration und das Mischungsverhältnis keiner besonderen Beschränkung unterliegen. Die Gesamtkonzentration sollte jedoch 10 Gew.% nicht übersteigen. Vorzugsweise wird ein Kupferhydroxidphosphat eingesetzt, insbesondere Libethenit.

Dem lasertransparenten Teil kann zur Erhöhung der Festigkeit der Schweißnaht und der Schweißgeschwindigkeit optional ein streuendes Additiv, wie z.B. TiO₂, CaCO₃, MgCO₃, oder andere dem Fachmann bekannte Weißpigmente oder Füllstoffe, etc., zugesetzt werden. In Abhängigkeit vom eingesetzten Polymeren wird das Additiv in Mengen von ≤ 2 Gew.%, vorzugsweise ≤ 0,5 Gew.% und insbesondere bevorzugt ≤ 0,3 Gew.% eingesetzt.

Weiterhin kann dem lasertransparenten Polymerteil in geringen Mengen ebenfalls ein Absorber zugesetzt werden. Die Zugabe eines streuenden Absorbers im lasertransparenten Teil erhöht in der Regel die Festigkeit der Schweißnaht und erlaubt eine schnellere Verschweißung. Geeignete laserstreuende Absorber sind leitfähige Pigmente, wie z.B. Antimon, Sb₂O₃, (Sn,Sb)O₂, mit (Sn,Sb)O₂ beschichteter Glimmer, mit (Sn,Sb)O₂ und SiO₂ beschichteter Glimmer, mit TiO₂ beschichtete Glimmerpigmente, Kupferhydroxidphosphat, Kupferphosphat. Derartige Absorber sind z.B. von der Fa. Merck KGaA unter der Marke Lazerflair^{®} erhältlich.

Der Absorber wird dem lasertransparenten Polymerteil vorzugsweise in Mengen von 0,001 - 2 Gew.%, insbesondere von 0,01 - 1 Gew.% und ganz besonders bevorzugt 0,05 - 0,5 Gew.%, bezogen auf das Polymerteil zugesetzt. Der Anteil an Absorber im lasertransparenten Polymerteil ist aber immer deutlich geringer als im laserabsorbierenden Teil. In der Regel enthält der laserabsorbierende Teil eine 2-20fache, vorzugsweise 5-10fache, höhere Menge an Absorber als der lasertransparente Teil.

Der lasertransparente Teil kann sowohl einen streuenden Absorber als auch ein streuendes Additiv enthalten. Sofern es sich bei dem streuenden Absorber um Kupferhydroxidphoshat oder Kupferphosphat handelt, unterscheidet sich der Absorber im lasertransparenten Teil und im laserabsorbierenden Teil lediglich in der Konzentration. Die Gesamtkonzentration an streuendem Absorber und streuendem Additiv im lasertransparenten Teil sollte 2 Gew.% nicht übersteigen.

Die Konzentration des bzw. der Absorber im jeweiligen Polymerteil ist allerdings abhängig von dem eingesetzten Kunststoffsystem. Der geringe Anteil an Absorber verändert das Kunststoffsystem unwesentlich und beeinflußt nicht dessen Verarbeitbarkeit.

Ferner können den Kunststoffen Farbmittel zugesetzt werden, die farbliche Variationen jeder Art zulassen und gleichzeitig eine Beibehaltung der Laserverschweißung gewährleisten. Geeignete Farbmittel sind insbesondere farbige Metalloxidpigmente sowie organische und anorganische Pigmente und Farbstoffe.

Die Polymere können weiterhin auch Füllstoffe enthalten. Es können alle dem Fachmann bekannten Füllstoffe eingesetzt werden, wie z.B. natürlicher und synthetischer Glimmer, Glasbeads oder Glaspulver, Nylon Powder, reine oder gefüllte Melaminharze, Talkum, Gläser, Kaolin, Oxide oder Hydroxide von Aluminium, Magnesium, Calcium, Zink, BiOCl, Bariumsulfat, Calciumsulfat, Calciumcarbonat, Magnesiumcarbonat, Kohlenstoff, sowie physikalische oder chemische Kombinationen dieser Stoffe.

Als Polymere kommen alle dem Fachmann bekannten Kunststoffe in Betracht, unabhängig davon ob sie amorph, teilkristallin oder mehrphasig sind, z.B. solche, wie sie z.B. im Ullmann, Bd. 15, S. 457 ff., Verlag VCH beschrieben werden, wie z.B. Polyolefine, insbesondere Polyethylen (PE) und Polypropylen (PP), Polyamid (PA), Polyester, Polyether, Polyphenylenether, Polyacrylester, Polyurethan (PU), Polyoxymethylen (POM), Polymethacrylester, Polymethylmethacrylat (PMMA), Polyvinylacetat (PVAC), Polyvinylacetal (PVB), Polystyrol (PS), Acrylnitril-Butadien-Styrol (ABS), Acrylnitril-Styrol-Acrylester (ASA), ABS-Propfpolymerisate, Polyalkylenterephthalate, insbesondere Polybutylenterephthalat (PBT) und Polyethylenterephthalat (PET), Polyvinylchlorid (PVC), Polyvinylidenchlorid (PVDC), Polyvinylidenfluorid (PVDF), Polytetrafluorethylen (PTFE) Polycarbonat (PC), Polyethersulfone, Polyetherketone, thermoplastische Polyurethane (TPU), thermoplastische Elastomere (PTE) sowie deren Copolymere und/oder Mischungen davon. Besonders bevorzugt sind thermoplastische Kunststoffe.

Die Herstellung der dotierten Kunststoffgranulate erfolgt in der Regel so, dass in einem geeigneten Mischer das Kunststoffgranulat vorgelegt, mit eventuellen Zusätzen benetzt und danach der Absorber zugesetzt und untergemischt wird. Dem Kunststoffgranulat können bei der Einarbeitung des Absorbers gegebenenfalls streuende Additive, Haftmittel, organische polymerverträgliche Lösungsmittel, Stabilisatoren und/oder unter den Arbeitsbedingungen temperaturstabile Tenside zugesetzt werden. Die Pigmentierung des Kunststoffes erfolgt in der Regel über ein Farbkonzentrat (Masterbatch) oder Compound. Die so erhaltene Mischung kann dann direkt in einem Extruder oder einer Spritzgießmaschine verarbeitet werden. Die bei der Verarbeitung gebildeten Formkörper zeigen eine sehr homogene Verteilung des Absorbers. Zuletzt findet die Laserverschweißung mit einem geeigneten Laser statt.

Gegenstand der Erfindung ist auch ein Verfahren zur Herstellung der erfindungsgemäßen laserschweißbaren Polymere, dadurch gekennzeichnet, dass das laserabsorbierende Polymerteil und gegebenenfalls das lasertransparente Polymerteil mit dem jeweiligen Absorber und optional weiteren Additiven und Hilfsmitteln gemischt und dann unter Wärmeeinwirkung verformt werden.

Die Verschweißung mit dem Laser erfolgt derart, dass der Probenkörper in den Strahlengang eines Continuous Wave-Lasers, vorzugsweise eines Nd:YAG- oder Dioden-Lasers gebracht wird. Die Wellenlängen liegen vorzugsweise zwischen 808 und 1100 nm. Da bei diesen Wellenlängen die meisten Polymere mehr oder weniger transparent sind, werden die Absorptionseigenschaft durch die Zugabe von Additiven erreicht. Es sind auch Verschweißungen mit anderen herkömmlichen Lasertypen möglich, wenn diese in einer Wellenlänge arbeiten, bei der der verwendete Absorber eine hohe Absorption zeigt. Die Verschweißung wird durch die Bestrahlungszeit und Bestrahlungsleistung des Lasers sowie des verwendeten Kunststoffsystems bestimmt. Die Leistung der verwendeten Laser hängt von der jeweiligen Anwendung ab und kann im Einzelfall vom Fachmann ohne weiteres ermittelt werden.

Der verwendete Laser hat im allgemeinen eine Wellenlänge im Bereich von 157 nm bis 10,6 µm, vorzugsweise im Bereich von 800 nm bis 1200 nm. Beispielsweise seien hier Nd:YAG-Laser (1064 nm) oder Dioden-Laser (750-1050 nm, vorzugsweise 808 nm, 940 nm oder 980 nm) erwähnt. Besonders bevorzugt werden Nd:YAG-Laser (1064 nm) und Dioden-Laser der verschiedenen Wellenlängen eingesetzt. Die gängigsten Wellenlängen bei Diodenlasern sind 808 nm, 940 nm und 980 nm. Die Laser für das Laserschweißen von Polymeren haben eine Leistung von 30-200 Watt, bevorzugt 50-160 Watt. Entsprechende Laser, die für das Laserschweißen der erfindungsgemäßen Polymere geeignet sind, sind kommerziell erhältlich.

Das Laserschweißen mit den erfindungsgemäß dotierten Polymeren kann auf allen Gebieten erfolgen, wo bisher übliche Fügeverfahren eingesetzt werden, und wo das Schweißverfahren bisher aufgrund der lasertransparenten Polymere und der hellen Farben nicht eingesetzt werden konnte. Damit stellt das lasertransmissive Kunststoffschweißverfahren eine Alternative zu herkömmlichen Fügeverfahren dar, beispielsweise dem Hochfrequenzschweißen, Vibrationsschweißen, dem Ultraschallschweißen, dem Heißluftschweißen oder auch dem Kleben von Kunststoffteilen.

Die Laserverschweißung von Kunststoffgegenständen bzw. Formkörpern, die aus den erfindungsgemäß dotierten Polymerteilen bestehen, ist somit möglich.

Die folgenden Beispiele sollen die Erfindung erläutern ohne sie jedoch zu begrenzen. Die angegebenen Prozentangaben sind Gewichtsprozent.

### Beispiele:

Die Schweißversuche werden mit einem 150 W Diodenlaser (940 nm) durchgeführt.

Es werden 1,5 mm starke PP-Plättchen sowohl für die lasertransparente als auch für die laserabsorbierende Seite mit verschiedenen Additiven und Farbmitteln verwendet. Als Kupferhydroxidphosphat wird Libethenit eingesetzt.

Als Vergleichssystem wird PP natur mit PP mit 1 % Lazerflair^{®} 820 (elektrisch leitfähiges Laserpigment der Fa. Merck KGaA) verschweißt. Es wird hierbei eine Schweißgeschwindigkeit von 40mm/s erreicht. Dies entspricht einer Streckenenergie von 37,5 J/cm.

### Beispiel 1

| | |
|---|---|
| Lasertransparenter Teil: | PP natur |
| Laserabsorbierender Teil: | PP mit 1 % Kupferhydroxidphosphat |

Hierbei wird eine Schweißgeschwindigkeit von 60 mm/s erreicht. Dies entspricht einer Streckenenergie von 25 J/cm.

### Beispiel 2

| | |
|---|---|
| Lasertransparenter Teil: | PP mit 0,1 % Lazerflair^{®} 820 |
| Laserabsorbierender Teil: | PP mit 1 % Kupferhydroxidphosphat |

Hierbei wird eine Schweißgeschwindigkeit von 120 mm/s erreicht. Dies entspricht einer Streckenenergie von 12,5 J/cm.

### Beispiel 3

Formulierung mit TiO₂ für helle Kunststoffformulierungen:

| | |
|---|---|
| Lasertransparenter Teil: | PP mit 0,1 % Lazerflair^{®} 820 |
| Laserabsorbierender Teil: | PP mit 0,5 % Kupferhydroxidphosphat und 0,5% TiO₂ |

Hierbei wird eine Schweißgeschwindigkeit von 150 mm/s erreicht. Dies entspricht einer Streckenenergie von 10 J/cm.

Bei der Festigkeitsprüfung sind alle Proben im Grundwerkstoff gerissen und nicht in der Schweißnaht. Die angeführten Beispiele zeigen, dass die Verwendung eines stärkeren Absorbers in der absorbierenden Seite und gegebenenfalls die Verwendung eines schwachen Absorbers auf der lasertransparenten Seite die Schweißgeschwindigkeit um einen Faktor > 3 beschleunigt und somit die Streckenenergien nur noch 1/3 des Ausgangsmaterials betragen.

Die Werte der Gesamt-Transmission, diffusen Transmission und der Gesamt-Reflexion der verwendeten Kunststoffplättchen werden mit einem Perkin-Elmer Gerät (Lamda 900) mit Ulbrichtkugel gemessen. Die Absorption gemäß Tabelle 1 errechnet sich aus Gesamttransmission und Gesamtreflexion (100% = A + R+ T):

**Tabelle 1:**

| Absorption | |
|---|---|
| **laserabsorbierende Teile** | |
| | 800-1200 nm |
| Vergleichssystem | 40 - 70 % |
| Beispiele 1+2 | 70 - 85 % |
| Beispiel 3 | 60 - 75 % |
| | |

| **lasertransparente Teile** | |
|---|---|
| PP natur | 0-5 % |
| Beispiele 2+3 | 10-12 % |

Die Lichtstreuung bei dem laserstreuenden Absorber in den Beispielen 2 und 3 beträgt im Bereich von 800-1200 nm 40 % (bei 1200 nm) bis 60 % (bei 800 nm).

## Patentansprüche

1. Laserschweißbare Polymere bestehend aus einem lasertransparenten Teil und einem laserabsorbierenden Teil, die mittels Laserlicht miteinander verschweißt werden können, **dadurch gekennzeichnet, dass** der laserabsorbierende Teil als Absorber Kupferhydroxidphosphat und/oder Kupferphosphat enthält.

2. Laserschweißbare Polymere nach Anspruch 1, **dadurch gekennzeichnet, dass** das Kupferhydroxidphoshat bzw. Kupferphosphat ausgewählt ist aus der Gruppe Cu₃(PO₄)₂ * 2Cu(OH)2 (CHP = Libethenit), Cu₃(PO₄)₂ * Cu(OH)₂, Cu₂P₂O₇ * H₂O, 4CuO * P₂O₅ * H₂O, 5CuO * P₂O₅ * 3H₂O, 6CuO * P₂O₅ * 3H₂O, 4CuO * P₂O₅ * 3H₂O, 4CuO * P₂O₅ * 1,2 H₂O, 4 CuO * P₂O₅, 4CuO * P₂O₅ * 1,5 H₂O.

3. Laserschweißbare Polymere nach Anspruch 1 oder 2, **dadurch gekennzeichnet, dass** der laserabsorbierende Teil Kupferhydroxidphosphat und/oder Kupferphosphat in Mengen von 0,5 - 10 Gew.% bezogen auf das laserabsorbierende Teil enthält.

4. Laserschweißbare Polymere nach einem der Ansprüche 1 bis 3, **dadurch gekennzeichnet, dass** der lasertransparente Teil zusätzlich einen laserstreuenden Absorber enthält.

5. Laserschweißbare Polymere nach einem der Ansprüche 1 bis 4, **dadurch gekennzeichnet, dass** der laserstreuende Absorber ausgewählt ist aus der Gruppe leitfähiges Pigment, Antimon, Sb₂O₃, (Sn,Sb)O₂, mit (Sn,Sb)O₂ beschichteter Glimmer, mit (Sn,Sb)O₂ und SiO₂ beschichteter Glimmer, mit TiO₂ beschichtete Glimmerpigmente, Kupferhydroxidphosphat, Kupferphosphat allein oder in Kombination.

6. Laserschweißbare Polymere nach einem der Ansprüche 1 bis 5, **dadurch gekennzeichnet, dass** der laserstreuende Absorber im lasertransparenten Teil in Mengen von 0,001 - 2 Gew.% bezogen auf den lasertransparenten Teil enthalten ist.

7. Laserschweißbare Polymere nach einem der Ansprüche 1 bis 6, **dadurch gekennzeichnet, dass** der lasertransparente Teil zusätzlich ein laserstreuendes Additiv enthält.

8. Laserschweißbare Polymere nach einem der Ansprüche 1 bis 7, **dadurch gekennzeichnet, dass** das laserstreuende Additiv TiO₂, CaCO₃, MgCO₃, Glasbeads oder Gemische davon sind.

9. Laserschweißbare Polymere nach einem der Ansprüche 1 bis 8, **dadurch gekennzeichnet, dass** das laserstreuende Additiv im lasertransparenten Teil in Mengen von ≤ 1 Gew.%, bezogen auf das lasertransparente Teil, enthalten ist.

10. Laserschweißbare Polymere nach einem der Ansprüche 1 bis 9, **dadurch gekennzeichnet, dass** die laserschweißbaren Polymerteile mit einem Dioden-Laser oder Nd:YAG-Laser verschweißt werden.

11. Laserschweißbare Polymere nach einem der Ansprüche 1 bis 10, **dadurch gekennzeichnet, dass** das Polymer ein thermoplastischer Kunststoff ist.

12. Laserschweißbare Polymere nach einem der Ansprüche 1 bis 11, **dadurch gekennzeichnet, dass** das Polymer ein Polyolefin, Polyamid (PA), Polyester, Polyether, Polyphenylenether, Polyacrylester, Polyurethan (PU), Polyoxymethylen (POM), Polymethacrylester, Polymethylmethacrylat (PMMA), Polyvinylacetat (PVAC), Polyvinylacetal (PVB), Polystyrol (PS), Acrylnitril-Butadien-Styrol (ABS), Acrylnitril-Styrol-Acrylester (ASA), ABS-Propfpolymerisat, Polyalkylenterephthalat, Polyvinylchlorid (PVC), Polyvinylidenchlorid (PVDC), Polyvinylidenfluorid (PVDF), Polytetrafluorethylen (PTFE) Polycarbonat (PC), Polyethersulfon, Polyetherketon, thermoplastisches Polyurethan (TPU), thermoplastisches Elastomer (PTE) sowie deren Copolymere und/oder Mischungen davon ist.

13. Verfahren zur Herstellung von laserschweißbaren Polymeren nach nach einem der Ansprüche 1 bis 12, **dadurch gekennzeichnet, dass** man zu dem laserabsorbierenden Teil und gegebenenfalls zu dem lasertransparenten Teil den Absorber und gegebenenfalls weitere Additive und Hilfsmittel gibt und dann das Polymer unter Wärmewirkung verformt.

14. Verwendung der laserschweißbaren Polymeren nach einem der Ansprüche 1 bis 12 für das transmissive Laserschweißen.

## Claims

1. Laser-weldable polymers consisting of a laser-transparent part and a laser-absorbent part, which can be welded to one another by means of laser light, **characterised in that** the laser-absorbent part comprises, as absorber, copper hydroxide phosphate and/or copper phosphate.

2. Laser-weldable polymers according to Claim 1, **characterised in that** the copper hydroxide phosphate or copper phosphate is selected from the group Cu₃(PO₄)₂ * 2Cu(OH)₂ (CHP = libethenite), Cu₃(PO₄)₂ * Cu(OH)₂, Cu₂P₂O₇ * H₂O, 4CuO * P₂O₅ * H₂O, 5CuO * P₂O₅ * 3H₂O, 6CuO * P₂O₅ * 3H₂O, 4CuO * P₂O₅ * 3H₂O, 4CuO * P₂O_{5 *} 1.2 H₂O, 4 CuO * P205, 4CuO * P₂O₅ * 1.5 H₂O.

3. Laser-weldable polymers according to Claim 1 or 2, **characterised in that** the laser-absorbent part comprises copper hydroxide phosphate and/or copper phosphate in amounts of 0.5 - 10% by weight, based on the laser-absorbent part.

4. Laser-weldable polymers according to one of Claims 1 to 3, **characterised in that** the laser-transparent part additionally comprises a laser-scattering absorber.

5. Laser-weldable polymers according to one of Claims 1 to 4, **characterised in that** the laser-scattering absorber is selected from the group conductive pigment, antimony, Sb₂O₃, (Sn,Sb)O₂, (Sn,Sb)O₂-coated mica, (Sn,Sb)O₂- and SiO₂-coated mica, TiO₂-coated mica pigments, copper hydroxide phosphate and copper phosphate, alone or in combination.

6. Laser-weldable polymers according to one of Claims 1 to 5, **characterised in that** the laser-scattering absorber is present in the laser-transparent part in amounts of 0.001 - 2% by weight, based on the laser-transparent part.

7. Laser-weldable polymers according to one of Claims 1 to 6, **characterised in that** the laser-transparent part additionally comprises a laser-scattering additive.

8. Laser-weldable polymers according to one of Claims 1 to 7, **characterised in that** the laser-scattering additive is TiO₂, CaCO₃, MgCO₃, glass beads or mixtures thereof.

9. Laser-weldable polymers according to one of Claims 1 to 8, **characterised in that** the laser-scattering additive is present in the laser-transparent part in amounts of ≤ 1% by weight, based on the laser-transparent part.

10. Laser-weldable polymers according to one of Claims 1 to 9, **characterised in that** the laser-weldable polymer parts are welded using a diode laser or Nd:YAG laser.

11. Laser-weldable polymers according to one of Claims 1 to 10, **characterised in that** the polymer is a thermoplastic.

12. Laser-weldable polymers according to one of Claims 1 to 11, **characterised in that** the polymer is a polyolefin, polyamide (PA), polyester, polyether, polyphenylene ether, polyacrylate, polyurethane (PU), polyoxymethylene (POM), polymethacrylate, polymethyl methacrylate (PMMA), polyvinyl acetate (PVAC), polyvinyl acetal (PVB), polystyrene (PS), acrylonitrile-butadiene-styrene (ABS), acrylonitrile-styrene-acrylate (ASA), ABS graft polymer, polyalkylene terephthalate, polyvinyl chloride (PVC), polyvinylidene chloride (PVDC), polyvinylidene fluoride (PVDF), polytetrafluoroethylene (PTFE), polycarbonate (PC), polyether sulfone, polyether ketone, thermoplastic polyurethane (TPU), thermoplastic elastomer (PTE) or a copolymer thereof and/or a mixture thereof.

13. Process for the preparation of laser-weldable polymers according to one of Claims 1 to 12, **characterised in that** the absorber and optionally further additives and auxiliaries are added to the laser-absorbent part and optionally to the laser-transparent part, and the polymer is then shaped under the action of heat.

14. Use of the laser-weldable polymers according to one of Claims 1 to 12 for transmissive laser welding.

## Revendications

1. Polymères soudables par laser constitués par une partie transparente au laser et par une partie absorbant le laser, lesquelles peuvent être soudées l'une à l'autre au moyen d'une lumière laser, **caractérisés en ce que** la partie absorbant le laser comprend, en tant qu'absorbeur, du phosphate d'hydroxyde de cuivre et/ou du phosphate de cuivre.

2. Polymères soudables par laser selon la revendication 1, **caractérisés en ce que** le phosphate d'hydroxyde de cuivre ou le phosphate de cuivre est choisi parmi le groupe Cu₃(PO₄)₂ * 2Cu(OH)2 (CHP = libethénite), Cu₃(PO₄)₂ * Cu(OH)₂, Cu₂P₂O₇ * H₂O, 4CuO * P₂O₅ * H₂O, 5CuO * P₂O₅ * 3H₂O, 6CuO * P₂O₅ * 3H₂O, 4CuO * P205 * 3H₂O, 4CuO * P₂O₅ * 1.2 H₂O, 4 CuO * P205, 4CuO * P₂O₅ * 1.5 H₂O.

3. Polymères soudables par laser selon la revendication 1 ou 2, **caractérisés en ce que** la partie absorbant le laser comprend du phosphate d'hydroxyde de cuivre et/ou du phosphate de cuivre selon des quantités de 0,5 - 10% en poids, sur la base de la partie absorbant le laser.

4. Polymères soudables par laser selon l'une des revendications 1 à 3, **caractérisés en ce que** la partie transparente au laser comprend additionnellement un absorbeur diffuseur de laser.

5. Polymères soudables par laser selon l'une des revendications 1 à 4, **caractérisés en ce que** l'absorbeur diffuseur de laser est choisi parmi le groupe pigment conducteur, antimoine, Sb₂O₃, (Sn,Sb)O₂, mica revêtu de (Sn,Sb)O₂, mica revêtu de (Sn,Sb)O₂ et SiO₂, pigments de mica revêtu de TiO₂, phosphate d'hydroxyde de cuivre et phosphate de cuivre, seuls ou en combinaison.

6. Polymères soudables par laser selon l'une des revendications 1 à 5, **caractérisés en ce que** l'absorbeur diffuseur de laser est présent dans la partie transparente au laser selon des quantités de 0,001 - 2% en poids, sur la base de la partie transparente au laser.

7. Polymères soudables par laser selon l'une des revendications 1 à 6, **caractérisés en ce que** la partie transparente au laser comprend additionnellement un additif diffuseur de laser.

8. Polymères soudables par laser selon l'une des revendications 1 à 7, **caractérisés en ce que** l'additif diffuseur de laser est TiO₂, CaCO₃, MgCO₃, des perles en verre ou des mélanges afférents.

9. Polymères soudables par laser selon l'une des revendications 1 à 8, **caractérisés en ce que** l'additif diffuseur de laser est présent dans la partie transparente au laser selon des quantités ≤ 1% en poids, sur la base de la partie transparente au laser.

10. Polymères soudables par laser selon l'une des revendications 1 à 9, **caractérisés en ce que** les parties de polymères soudables par laser sont soudées en utilisant un laser à diode ou un laser Nd:YAG.

11. Polymères soudables par laser selon l'une des revendications 1 à 10, **caractérisés en ce que** le polymère est un thermoplastique.

12. Polymères soudables par laser selon l'une des revendications 1 à 11, **caractérisés en ce que** le polymère est une polyoléfine, un polyamide (PA), un polyester, un polyéther, un éther de polyphénylène, un polyacrylate, un polyuréthane (PU), un polyoxyméthylène (POM), un polyméthacrylate, un polyméthylméthacrylate (PMMA), un acétate de polyvinyle (PVAC), un acétal de polyvinyle (PVB), un polystyrène (PS), un acrylonitrile-butadiène-styrène (ABS), un acrylonitrile-styrène-acrylate (ASA), un polymère greffé ABS, un téréphtalate de polyalkylène, un chlorure de polyvinyle (PVC), un chlorure de polyvinylidène (PVDC), un fluorure de polyvinylidène (PVDF), un polytétrafluoroéthylène (PTFE), un polycarbonate (PC), un polyéthersulfone, un polyéthercétone, un polyuréthane thermoplastique (TPU), un élastomère thermoplastique (PTE) ou un copolymère afférent et/ou un mélange afférent.

13. Procédé pour la préparation de polymères soudables par laser selon l'une des revendications 1 à 12, **caractérisés en ce que** l'absorbeur et en option, d'autres additifs et auxiliaires sont ajoutés à la partie absorbant le laser et en option, à la partie transparente au laser, et le polymère est ensuite conformé sous l'action de la chaleur.

14. Utilisation des polymères soudables par laser selon l'une des revendications 1 à 12 pour un soudage laser par transmission.
